# EUROPÄISCHE PATENTANMELDUNG

(11) **EP 0 949 051 A2**
(43) Veröffentlichungstag der Anmeldung: **13.10.1999**
(21) Anmeldenummer: 99106515.2
(22) Anmeldetag: 30.03.1999
(51) Int. Cl.: B29C 44/42

(54) **Spritzgiessverfahren**

(30) Priorität: 08.04.1998 DE 19815681
(71) Anmelder: Thimm Verpackung GmbH + Co., D-37154 Northeim (DE)
(72) Erfinder: Christoph, Michael Dr.-Ing., 38678 Clausthal-Zellerfeld (DE); Holzmüller, Günter Dipl.-Ing., 04157 Leipzig (DE)
(74) Vertreter: Lins, Edgar, Dipl.-Phys. Dr.jur.

(57) **Zusammenfassung**

Die Erfindung betrifft ein diskontinuierliches Spritzgießverfahren sowie eine Vorrichtung zu dessen Durchführung zur Herstellung von geschäumten Formteilen mit geringem spezifischen Gewicht, wobei ein rieselfähiges Produktgemisch dem Schneckenteil einer Spritzgießvorrichtung zugeführt und von dort unter thermischer und mechanischer Energieeinleitung als verdichtete und plastifizierte Masse in einen vor der Düse der Spritzgießvorrichtung angeordneten Stauraum gefördert wird, während die Düse geschlossen gehalten wird, worauf dann die im Stauraum unter hohem Druck gehaltene Masse durch Öffnen der Düse aus dem Stauraum heraus und in die Kavität eines Formwerkzeuges hineingedrückt wird, wo die Masse entspannt und aufschäumt. Dabei wird erfindungsgemäß vorgeschlagen, daß die Düse vor ihrem Öffnen in die Kavität des im übrigen geschlossenen Formwerkzeuges eingeführt, dort gesteuert geöffnet und geschlossen und in Anpassung an die Fortschrittgeschwindigkeit des Aufschäumens in der Kavität aus dieser heraus- und in ihre Ausgangsposition zurückgezogen wird.

## Beschreibung

Die Erfindung betrifft ein diskontinuierliches Spritzgießverfahren zur Herstellung von geschäumten Formteilen mit geringem spezifischen Gewicht, wobei ein rieselfähiges Produktgemisch dem Schneckenteil einer Spritzgießvorrichtung zugeführt und von dort unter thermischer und mechanischer Energieeinleitung als verdichtete und plastifizierte Masse in einen vor der Düse der Spritzgießvorrichtung angeordneten Stauraum gefördert wird, während die Düse geschlossen gehalten wird, worauf dann die im Stauraum unter hohem Druck gehaltene Masse durch Öffnen der Düse aus dem Stauraum heraus und in die Kavität eines Formwerkzeuges hineingedrückt wird, wo die Masse entspannt und aufschäumt.

Die Erfindung betrifft ferner eine Vorrichtung zur Durchführung eines derartigen Verfahrens. Hierbei ist die rotierende Schnecke in ihrem rückwärtigen Teil zugleich als Hydraulikkolben ausgeführt. Der Kolbengegendruck kann beim Füllvorgang in den Stauraum so eingestellt werden, daß er kleiner ist als der Staudruck. Das Abspritzen der im Stauraum unter Hochdruck stehenden Masse wird üblicherweise dadurch eingeleitet, daß zeitgleich die Düse schlagartig geöffnet und der Kolbengegendruck sehr viel großer eingestellt wird, so daß die Masse aus dem Stauraum herausgedrückt wird. Bei dem diskontinuierlichen Spritzgießverfahren werden die Einzelvorgänge "Einziehen der Masse in den Stauraum" und "Herausdrücken der Masse aus dem Stauraum" abwechselnd betrieben.

Der Erfindung liegt in erster Linie die Aufgabe zugrunde, ein diskontinuierliches Spritzgießverfahren zu entwickeln, mit dem sich insbesondere Formteile für Verpackungen herstellen lassen. Derartige Formteilverpackungen haben die Aufgabe, bruchempfindliche Güter so in einer Umverpackung zu fixieren, daß beliebig eingeleitete Stoßenergie bis zu einem Grenzwert vom Verpackungsformteil absorbiert wird. Standardmäßig werden künstliche Polymerwerkstoffe wie z. B. geschäumtes Polystyrol oder Polyäthylen für Polsteraufgaben verwendet. Ihre geringe Dichte, die fast beliebige Ausformbarkeit und die guten Dämpfungseigenschaften haben dazu geführt, daß diese Werkstoffe eine breite Anwendung finden. Natürliche Polymerwerkstoffe haben demgegenüber den Vorteil, daß sie aus nachwachsenden Rohstoffen bestehen und den Treibhauseffekt nicht forcieren. Sie sind darüberhinaus einfach zu entsorgen, beispielsweise durch Kompostierung. Bekannt sind auch Fasergußformteile oder aus Faserbrei gewonnene Formteile, denen jedoch der wesentliche Nachteil anhaftet, daß der Wärmebedarf für ihre Trocknung sehr hoch und ihr Dämpfungsverhalten in der Regel anisotrop, also richtungsabhängig ist. Diesen Nachteil weisen Schaumstrukturen nicht auf, da ihre Masse kleiner ist, und die Schaumstruktur isotropes Verhalten aufweist. Jedoch ist es bisher nur gelungen, z. B. Stärkeschäume in eindimensionaler Form als Loose-fill herzustellen. Erfindungsgemäß wird jedoch die Herstellung dickwandiger Verpackungsformteile angestrebt.

Die vorstehend genannte Aufgabe wird erfindungsgemäß dadurch gelöst, daß die Düse vor ihrem Öffnen in die Kavität des im übrigen geschlossenen Formwerkzeuges eingeführt, dort gesteuert geoffnet und geschlossen und in Anpassung an die Fortschrittgeschwindigkeit des Aufschäumens in der Kavität aus dieser heraus- und in ihre Ausgangsposition zurückgezogen wird.

Dabei ist es zweckmäßig, wenn zur Verzögerung der Ausformung der Masse bei ihrem Übergang vom Stauraum in die Kavität in letzterer ein den Aufschäumvorgang unterbindender Gasgegendruck aufgebaut wird, der erst nach vollständiger Einführung der Masse in das Formwerkzeug schlagartig abgebaut wird.

Mit dem erfindungsgemäßen Verfahren ist es möglich, auch größere Volumina abzuspritzen. Im Vergleich mit einem eine feststehende Düse verwendenden Verfahren, bei dem das Extrudat zwangsweise in die Kavität gepreßt wird, läßt sich mit dem erfindungsgemäßen Verfahren ein homogeneres Formteil erzielen.

Als zweckmäßig hat sich erwiesen die Verwendung eines rieselfähigen Produktgemisches aus u. a. Papiergranulat, modifizierter Stärke und Polyvinylalkohol (PVA), wobei das Granulat einen Durchmesser von etwa 5 bis 7 mm, vorzugsweise 6 mm und eine Länge von 8 bis 12 mm, vorzugsweise 10 mm aufweist. Durch die genannte Dimensionierung des Granulats wird eine bei pulverförmigen Produktmischungen meist auftretende Entmischung aufgrund der unterschiedlichen spezifischen Gewichte vermieden. Bei dem erfindungsgemäßen Verfahren ist ein selbsttätiger, störungsfreier Materialeinzug gewährleistet.

Durch die deutsche Patentschrift DE 34 20 195 C2 ist ein Verfahren zum Herstellen von Platten oder Formkörpern aus Altpapier und/oder Pappe bekanntgeworden. Das Ausgangsmaterial wird zuerst zu einer Fasermasse aufgearbeitet, dann mit Zusatzstoffen vermischt und nach weiterer Verarbeitung ausgeformt. Als Zusatzstoffe werden plastifizierbare abgebaute Stärken, Mehlmischungen mit hohem Stärkeanteil oder Proteine untergemischt. Die Mischung wird dann durch thermische und mechanische Energieeinleitung im Extruder verdichtet und plastifiziert, wobei beim Extruderaustritt die Masse durch Temperatur- und Druckabfall expandiert bzw. aufschäumt. Hier soll die Fasermasse vor oder während der Zumischung der Zusatzstoffe feinvermahlen werden. Für die thermische und mechanische Energieeinleitung zur Plastifizierung der Mischung wird ein beheizbarer Schneckenextruder verwendet. Zur Beschleunigung der Verarbeitung im Extruder kann den aufgearbeiteten Fasermassen Polyvinylalkohol (PVA) zugesetzt werden (DE 40 08 862 C1).

Soweit vorstehend zur Beschreibung des erfindungsgemäßen Verfahrens Papiergranulat genannt wurde, so soll hierunter ganz allgemein ein Granulat aus Altpapier und/oder Pappe verstanden werden. Wird dieses Papiergranulat im Extruder hergestellt, muß die Erwärmung unter 60° C liegen, um ein Gelantieren zu vermeiden, da sich sonst später kein einwandfreies Aufschäumen erzielen läßt. Setzt man bei dem erfindungsgemäß zu verwendenden Produktgemisch die Summe der drei genannten Bestandteile zu 100 % an, so betragen die Anteile an der Ausgangsmasse beim PVA etwa 50 %, bei der modifizierten Stärke etwa 30% und bei dem Papiergranulat etwa 20 %.

Eine Vorrichtung zur Durchführung des erfindungsgemäßen Verfahrens ist erfindungsgemäß dadurch gekennzeichnet, daß Einspritzeinheit und Formwerkzeug in Axialrichtung relativ gegeneinander verschiebbar und die Düse als Tauchdüse ausgebildet sind. Dabei ist es grundsätzlich möglich, die Einspritzeinheit gegenüber dem stationären Formwerkzeug, das Formwerkzeug gegenüber der stationären Einspritzeinheit oder aber beide Vorrichtungsteile gegeneinander zu verschieben.

Wird eine verschiebbar angeordnete Einspritzeinheit vorgesehen, so ist es zweckmäßig, wenn diese in ihre Ausgangsstellung von einer stationär ausgebildeten Heizeinrichtung umschlossen ist. Dabei kann es sich z. B. um elektrische Heizwendeln handeln, in die die Einspritzeinheit beim Zurückziehen aus dem Formwerkzeug wieder eintaucht. Die die Schnecke umschließende Zylinderwandung wird auf ihrer Außenseite in herkömmlicher Weise mit Luft und/oder Wasser gekühlt.

Um bei der Düse eine Selbstabdichtung gegenüber dem im Formwerkzeug herrschenden Innendruck sicherzustellen, zugleich aber einen schnellen Ausstoß der vorverdichteten Masse in die Kavität des Formwerkzeuges zu erzielen, ist es zweckmäßig, wenn die Düse zumindest einen zumindest einmal umgelenkten Austrittskanal mit einem großen Austrittsquerschnitt und als Verschlußelement einen steuerbaren Platten- oder Hülsendrehschieber aufweist. Ein Hülsendrehschieber gibt die Möglichkeit, die eingetauchte Düse direkt vor Ort mit großen Querschnitten öffnen und schließen zu können.

Klassische Thermoplastwerkzeuge sind so ausgeführt, daß die Oberfläche des Formwerkzeugs direkt die Oberfläche des Formlings abbildet. Die frisch abgespritzte erfindungsgemäße Schaummasse hat jedoch eine so hohe Temperatur, daß der Wasserdampf aus dem Formteil entweicht und selbst an einer vorgeheizten Werkzeugoberfläche kondensiert. Das Kondensat löst dann die Stärke erneut an und führt dazu, daß das Formteil in der Kavität haften bleibt und eine versprödete Oberfläche aufweist. Letzteres würde aber zu einem Verkratzen empfindlicher Packgutoberflächen führen. Erfindungsgemäß wird daher vorgeschlagen, daß das Formwerkzeug doppelwandig ausgebildet ist, wobei die Innenwandung permeabel ist und der Wandungszwischenraum an Unterdruck anschließbar ist. Das zweiteilige Formwerkzeug ist also zweischalig ausgeführt, wobei der Wasserdampf ungehindert durch die die Polsteroberfläche gestaltende Fläche der Werkzeuginnenwandung hindurch in den Zwischenraum zu der eigentlich dichtenden Werkzeugoberfläche eintreten kann. Von dort wird der Wasserdampf dann gezielt abgesaugt. Je nach Gestaltung der permeablen Innenwandung als Drahtgitter, Lochblech oder dergleichen lassen sich unversprödete Oberflächen am Formteil erzielen.

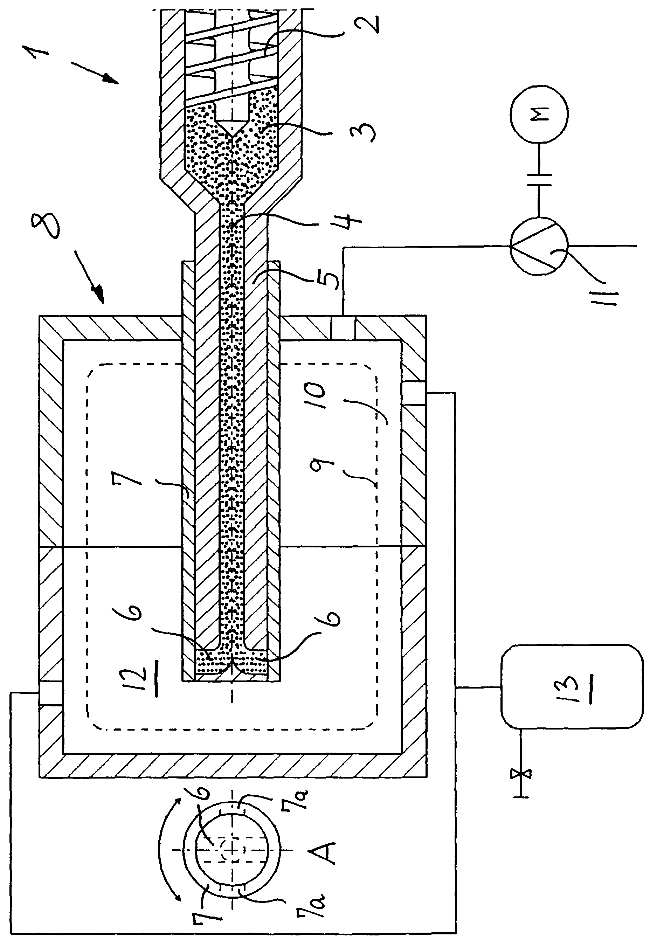

In der Zeichnung ist eine als Beispiel dienende Ausführungsform der Erfindung schematisch in einem Längsschnitt dargestellt.

Die Zeichnung zeigt eine Einspritzeinheit 1 mit dem - in Förderrichtung gesehen - hinteren Ende einer Plastifizier-Schnecke 2, der ein Stauraum 3 nachgeschaltet ist, an den der Düsenkanal 4 einer als Tauchdüse ausgebildeten Düse 5 angeschlossen ist. Der Düsenkanal 4 mündet in zwei jeweils um 90° umgelenkte Austrittskanäle 6, deren verhältnismäßig groß ausgebildeter Austrittsquerschnitt als Verschlußelement einen steuerbaren Hülsendrehschieber 7 aufweist. Die Detaildarstellung A zeigt die Stirnansicht der Düse 5, wobei der eingezeichnete Doppelpfeil die Verdrehmöglichkeiten des Hülsendrehschiebers 7 andeutet, dessen mit den Austrittskanälen 6 der Düse 5 in Deckung zu bringenden Ausspritzöffnungen mit dem Bezugszeichen 7a gekennzeichnet sind.

Dargestellt ist ferner ein Formwerkzeug 8, das doppelwandig ausgebildet ist, wobei die Innenwandung 9 permeabel ist. Der Wandungszwischenraum 10 ist an Unterdruck anschließbar, was in der Zeichnung durch eine Vakuumpumpe 11 symbolisiert ist. Im übrigen ist die Kavität 12 des Formwerkzeuges 8 an einen Kompensator 13 angeschlossen, um in der Kavität 12 einen Gasgegendruck aufbauen zu können.

Durch relative Axialverschiebung der Einspritzeinheit 1 und des Formwerkzeuges 8 gegeneinander wird die Düse 5 durch eine entsprechend angepaßte Einführöffnung des Formwerkzeuges 8 in dessen Kavität eingeschoben. Die Zeichnung zeigt die bevorzugte maximale Einschubtiefe. In der Kavität 12 wird über den Kompensator 13 ein Gasgegendruck aufgebaut; der Hülsendrehschieber 7 wird zur Öffnung der Austrittskanäle 6 gedreht; die Einspritzeinheit 1 bzw. ihre Düse 5 wird in Anpassung an die Fortschrittgeschwindigkeit des Aufschäumens in der Kavität 12 aus dieser heraus- und in ihre Ausgangsposition zurückgezogen. Nach vollständiger Einführung der Masse in die Kavität 12 des Formwerkzeuges wird der vorstehend genannte Gasgegendruck durch Öffnen entsprechender Ventile schlagartig abgebaut; daraufhin entspannt die eingespritzte Masse, schäumt auf und füllt die Kavität 12 aus. Der Füllgrad der Kavität 12 mit der noch unter Gasgegendruck gehaltenen Masse bestimmt im wesentlichen die Dichte des herzustellenden Formteiles, wobei erfindungsgemäß ein Füllgrad von etwa 1 : 10 zweckmäßig ist.

Vor dem Einfahren der Düse 5 in die Kavität 12 des Formwerkzeuges 8 wird das rieselfähige Produktgemisch in einen in der Zeichnung nicht näher dargestellten Trichter aufgegeben und von dort dem Schneckenteil der Spritzgießvorrichtung zugeführt. Das Produktgemisch durchläuft dann den Schneckenteil der Vorrichtung, wo es unter thermischer und mechanischer Energieeinleitung verdichtet und zu einer Masse plastifiziert wird, die von der Plastifizier-Schnecke 2 in den vor der Düse 5 angeordneten Stauraum 3 gefördert wird. Hierbei bleibt die Düse 5 geschlossen, so daß sich im Stauraum 3 ein hoher Druck ausbilden kann.

Bei Verwendung eines rieselfähigen Produktgemisches, das u. a. Papiergranulat, modifizierte Stärke und Polyvinylalkohol umfaßt, findet ein Durchmischen der eingezogenen Ausgangsmasse so gut wie gar nicht statt. Im Gegensatz zu der Verarbeitung von Thermoplasten kann auf eine Rückstromsperre ganz verzichtet werden. Die Länge des Schneckenzylinders und die Wahl des Kompressionsgrades sind in bezug auf das Werkstoffverhalten zu optimieren. Dabei erweist sich eine lange Schnecke bei hohen Systemdrücken als günstiger, da der Staudruck gegen den ringspaltförmigen Querschnitt zum Einzugsbereich hin abgebaut werden kann. Allerdings ist dann die in das System eingebrachte Reibungsleistung höher, was zu einer thermischen Zerstörung der Masse führen kann.

## Patentansprüche

1. Diskontinuierliches Spritzgießverfahren zur Herstellung von geschäumten Formteilen mit geringem spezifischen Gewicht, wobei ein rieselfähiges Produktgemisch dem Schneckenteil einer Spritzgießvorrichtung zugeführt und von dort unter thermischer und mechanischer Energieeinleitung als verdichtete und plastifizierte Masse in einen vor der Düse der Spritzgießvorrichtung angeordneten Stauraum gefördert wird, während die Düse geschlossen gehalten wird, worauf dann die im Stauraum unter hohem Druck gehaltene Masse durch Öffnen der Düse aus dem Stauraum heraus und in die Kavität eines Formwerkzeuges hineingedrückt wird, wo die Masse entspannt und aufschäumt, **dadurch gekennzeichnet**, daß die Düse vor ihrem Öffnen in die Kavität des im übrigen geschlossenen Formwerkzeuges eingeführt, dort gesteuert geöffnet und geschlossen und in Anpassung an die Fortschrittgeschwindigkeit des Aufschäumens in der Kavität aus dieser heraus- und in ihre Ausgangsposition zurückgezogen wird.

2. Verfahren nach Anspruch 1, **dadurch gekennzeichnet**, daß zur Verzögerung der Ausformung der Masse bei ihrem Übergang vom Stauraum in die Kavität in letzterer ein den Aufschäumvorgang unterbindender Gasgegendruck aufgebaut wird, der erst nach vollständiger Einführung der Masse in das Formwerkzeug schlagartig abgebaut wird.

3. Verfahren nach Anspruch 1 oder 2, **dadurch gekennzeichnet**, daß der im Formwerkzeug aus dem Formteil austretende Wasserdampf aus dem Formwerkzeug abgesaugt wird.

4. Verfahren nach Anspruch 1, 2 oder 3, **gekennzeichnet durch** die Verwendung eines rieselfähigen Produktgemisches aus u. a. Papiergranulat, modifizierter Stärke und Polyvinylalkohol (PVA), wobei das Granulat einen Durchmesser von etwa 5 bis 7 mm, vorzugsweise 6 mm und eine Länge von 8 bis 12 mm, vorzugsweise 10 mm aufweist.

5. Vorrichtung zur Durchführung des Verfahrens nach einem der vorhergehenden Ansprüche, **dadurch gekennzeichnet**, daß Einspritzeinheit (1) und Formwerkzeug (8) in Axialrichtung relativ gegeneinander verschiebbar und die Düse (5) als Tauchdüse ausgebildet sind.

6. Vorrichtung nach Anspruch 5, **dadurch gekennzeichnet**, daß die verschiebbar angeordnete Einspritzeinheit (1) in ihrer Ausgangsstellung von einer stationär ausgebildeten Heizeinrichtung umschlossen ist.

7. Vorrichtung nach Anspruch 5 oder 6, **dadurch gekennzeichnet**, daß die Düse (5) zumindest einen zumindest einmal umgelenkten Austrittskanal (6) mit einem großen Austrittsquerschnitt und als Verschlußelement einen steuerbaren Platten- oder Hülsendrehschieber (7) aufweist.

8. Vorrichtung nach Anspruch 5, 6 oder 7, **dadurch gekennzeichnet**, daß das Formwerkzeug (8) doppelwandig ausgebildet ist, wobei die Innenwandung (9) permeabel ist und der Wandungszwischenraum (10) an Unterdruck anschließbar ist.
